**Europäisches Patentamt**

**European Patent Office**

**Office européen des brevets**

(11) Veröffentlichungsnummer: **0 141 415**

**A2**

(12) **EUROPÄISCHE PATENTANMELDUNG**

(21) Anmeldenummer: **84113293.9**

(22) Anmeldetag: **05.11.84**

(51) Int. Cl.⁴: **B 60 R 13/08**
**B 32 B 5/20, B 32 B 5/24**
**B 32 B 27/18**

(30) Priorität: **08.11.83 DE 3340260**

(43) Veröffentlichungstag der Anmeldung:
**15.05.85 Patentblatt 85/20**

(84) Benannte Vertragsstaaten:
**BE FR GB IT**

(71) Anmelder: **Dura Tufting GmbH**
**Frankfurter Strasse 62**
**D-6400 Fulda(DE)**

(72) Erfinder: **Schneider, Erwin**
**Hirschweg 18**
**D-6400 Fulda(DE)**

(72) Erfinder: **Raab, Volker, Ing. (grad)**
**Spaakstrasse 5**
**D-6400 Fulda(DE)**

(72) Erfinder: **Schwarz, Herwig J., Dipl.-Ing.**
**Karlstrasse 36**
**D-6909 Walldorf(DE)**

(74) Vertreter: **Eyer, Eckhardt Philipp, Dipl.-Ing. et al,**
**Patentanwälte Eyer & Linser Robert-Bosch-Strasse 12a**
**D-6072 Dreieich(DE)**

(54) **Textile Flächenverkleidung für lärmbelastete Räume und Verfahren zu ihrer Herstellung.**

(57) Textile Flächenverkleidung für lärmbelastete Räume, insbesondere den Fahrgastraum von Kraftfahrzeugen aus einem textilen Träger mit Rückenbeschichtung, die aus einem mit mineralischen Füllstoffen gefüllten thermoplastischen Kunststoffmaterial besteht und mit dem textilen Träger in eine den Raumkonturen entspechende Kontur verformt ist und die mit einer zonenweise in Abhängigkeit von der spezifischen Lärmbelastung eine unterschiedliche Dicke und/oder Schwermaterialfüllung aufweisenden Beschichtung versehen ist. Die Herstellung erfolgt in der Weise, daß die Rückenbeschichtung in pulvriger oder körniger Form auf das unverformte textile Flächengebilde aufgebracht und anschließend vor der Verformung oder in einem Arbeitsgang mit der Verformung durch Temperatureinwirkung verdichtet und gegebenenfalls aufgeschäumt wird, wobei das auf den Träger aufgebrachte Beschichtungsmaterial vor der thermischen Verdichtung mit einer von einer Folie, einem Vlies oder einem Gewebe gebildeten Abdeckung versehen wird. Das Beschichtungsmaterial weist einen Füllgrad zwischen 50 und 80 Gew-% auf und wird in einer Körnung zwischen 20 und 2000 Mü in einer Menge zwischen 0,2 und 10,0 kg/m² aufgetragen und besteht im wesentlichen aus gefülltem Aethylen-Propylen-Dipolymer, Aethylenvinylacetat, Polyvinylchlorid, anderen Polyolefinen oder thermoplastischem Kautschuk. Die thermoplastische Abdeckung besteht aus Polyester, Polyaethylen, Polypropylen, Aethylenvinylacetat oder Polyurethan.

Fig. 1

Die Erfindung betrifft eine textile Flächenverkleidung für lärmbelastete Räume, insbesondere den Fahrgastraum von Kraftfahrzeugen, bestehend aus einem textilen Träger mit Rückenbeschichtung, die aus einem mit mineralischen Füllstoffen, insbesondere Schwerspat gefüllten thermoplastischen Kunststoffmaterial besteht und gemeinsam mit dem textilen Träger in eine den Raumkonturen entsprechende Kontur verformt ist, sowie ein Verfahren zu ihrer Herstellung.

Es ist bekannt, lärmbelastete Räume durch mit einer sog. Schwerbeschichtung versehene textile Flächenverkleidungen gegen äußere Lärmeinwirkung zu schützen. Derartige Flächenverkleidungen kommen insbesondere in Kraftfahrzeugen zum Einsatz, in denen durch die Flächenverkleidung der Fahrgastraum gegen Schallimmissionen abgeschirmt werden soll, die durch Luft- und Körperschall von Motor, Getriebe, Reifen, Lüfter oder dergl. hervorgerufen werden. Hierbei wird die Schwerbeschichtung als Rückenbeschichtung oder Einlage auf die textile Trägerbahn aufgebracht, d.h. vollflächig in gleicher Stärke und Dichte auf das gesamte Material aufkaschiert und anschließend zusammen mit dem textilen Trägermaterial verformt oder als unverformter oder vorgeformter Zuschnitt nachträglich auf dem bereits verformten textilen Flächengebilde durch Kleben oder Ein-

0141415

schäumen fixiert. Auch direktes Aufschäumen aus reaktiven Polyurethan-Komponenten ist bereits bekannt.

Durch die bekannten textilen Flächenverkleidungen wird bereits ein gewisser Schallschutz erreicht, es besteht jedoch bei den bekannten Flächenverkleidungen mit vollflächig gleichmäßiger Belegung der Nachteil, daß auch Flächenbereiche mitbelegt werden oder mit hochgefüllten Schwerschichten belegt werden, deren Belegung nicht oder nur mit Schichten mit einem geringeren Füllgrad erforderlich ist. Diese hergebrachte Beschichtungsart ist kostenaufwendig und hat darüberhinaus den weiteren wesentlichen Nachteil, daß nicht nur die als Schallquellen wirkenden Flächenbereiche sondern auch die als Schallsenken wirkenden Flächenbereiche eine Dämmung erfahren, so daß die an sich erwünschte Abführung von Schallenergie nach außerhalb des verkleideten Raumes verhindert wird. Hinzu kommt, daß durch die vollflächige Schwerschichtbelegung in vielen Fällen sowohl aus montagetechnischen als auch energetischen Gründen unerwünscht große Massen verarbeitet und transportiert werden müssen. Soweit die Aufbringung von flächigen Bahnen auf Teilflächen des textilen Trägers durch Verkleben betroffen ist, so ist diese Verfahrensweise außerordentlich arbeitsintensiv und führt zu großen Verbindungs- und Verformungsproblemen, ohne daß hierdurch eine genaue und den praktischen Schallverhältnissen entsprechende Massenverteilung gewährleistet werden könnte. Das gleiche gilt für ein weiteres bekanntes Verfahren, bei dem flächige Dämmschichten auf dem textilen Träger durch Einbinden in die Unterschäumung fixiert werden.

- 7 -

Darüberhinaus haftet allen bekannten Verfahren, bei denen die Schallschutzschicht von vorgefertigten Dämmschichtfolie gebildet ist, der Nachteil an, daß sie zu einer großen Verbundsteifigkeit der Verkleidung führen, was wiederum akustische Nachteile - eine zu hohe Schallabstrahlung - im Gefolge hat. Hinzu kommt, daß mit den bekannten textilen Flächenverkleidungen dieser Art befriedigende Ergebnisse nur in Bezug auf die Dämpfung des Körperschalls, nicht dagegen in Bezug auf die Dämmung des Luftschalls erzielt werden können. Zur Erzielung eines befriedigenden Schallschutzes bedarf es daher noch ergänzender Maßnahmen durch Aufbringen im allgemeinen bituminöser Unterschichten direkt auf die tragende Struktur, auf die die beschichtete Flächenverkleidung als Sichtverkleidung aufgebracht wird. Die getrennt herzustellenden und einzubringenden Dämmschichten gegen Luftschall einerseits und Dämpfungsschichten gegen Körperschall andererseits verursachen einen erheblichen Produktions- und Montageaufwand.

Der vorliegenden Erfindung liegt als Aufgabe die Schaffung einer textilen Flächenverkleidung zugrunde, die auf verfahrenstechnisch einfache Weise herstellbar ist und einen verbesserten Schallschutz lärmbelasteter Räume gewährleistet und die Erfindung besteht darin, daß die textile Flächenverkleidung mit einer zonenweise in Abhängigkeit von der zonenspezifischen Lärmbelastung eine unterschiedliche Dicke und/oder unterschiedliche Schwermaterialfüllung aufweisenden Beschichtung versehen ist.

Durch die Erfindung ist eine textile Flächenverkleidung geschaffen, mit deren Hilfe ein wesentlich verbesserter Schallschutz sowohl gegen Körperschall als auch gegen Luftschall erzielt wird dadurch, daß den jeweils spezifischen Schallbelastungen durch zonen- oder bereichsweise gezielte Gestaltung der Dämmschicht nach Stärke und Füllgrad Rechnung getragen wird. Hierbei wird gleichzeitig eine erhebliche Verringerung des Materialgewichtes der Flächenverkleidung erreicht.

Die Herstellung der textilen Flächenverkleidung erfolgt erfindungsgemäß in der Weise, daß die Rückenbeschichtung in pulvriger oder körniger Form auf den unverformten (eben geführten) textilen Träger aufgebracht und anschließend vor der Verformung oder in einem Arbeitsgang mit der Verformung durch Temperatureinwirkung verdichtet wird. Es ist auf diese Weise erstmals ein Verfahren geschaffen, mit dessen Hilfe - nach Beschichtungsstärke und/oder Materialzusammensetzung - uneinheitliche Rückenbeschichtungen in einem Arbeitsgang auf einen flächigen textilen Träger aufgebracht werden können und durch das textile Flächenverkleidungen der in Rede stehenden Art mit in weiten Grenzen den jeweiligen Anforderungen angepaßten räumlichen und physikalischen Eigenschaften hergestellt werden können. Hierbei werden überaschend als besonderer Vorteil der erfindungsgemäß vorgeschlagenen Verfahrensweise eine wesentliche Erhöhung der Haftung der Beschichtung auf dem Träger sowie eine wesentliche Verringerung der Steifigkeit der verformten Verkleidung erzielt. Die Herstellung und die Montage der erfindungsgemäßen Flächenverkleidungen sind hierdurch weiterhin wesentlich vereinfacht.

Das pulvrige bezw. körnige Material kann in einer Schicht oder mehrschichtig in unterschiedlicher Zusammensetzung aufgebracht werden, wobei eine der Schichten oder mehrere einen Anteil an schäumendem oder treibfähigem Material enthalten können, das bei Erreichen einer vorgegebenen Temperatur eine großflächige oder bereichsweise Volumenvergrößerung der Rückenbeschichtung durch Aufschäumen bezw. Treiben bewirkt. Es kann hierdurch auf einfache Weise allen durch die Raumkonturen gestellten Anforderungen Rechnung getragen werden, es können jedoch insbesondere sich in in weiten Grenzen verändernde Dämm- und Dämpfungseigenschaften erzielt werden. So können beispielsweise durch gezielte Schäumung bezw. Treibung einerseits und Verdichtung andererseits ein punktweiser bezw. linienförmiger Verbund der Schwereteilchen geschaffen werden, der einen hohen inneren Verlustmodul – aufgrund der gegebenen Struktur und Bindungsform werden auftreffende Schwingungen, Stöße und auftreffender Luftschall nur schwach aufgenommen – besitzt und der demgemäß in Bezug auf sein akustisches Verhalten außer Dämmeigenschaften auch Dämpfungseigenschaften zeigt. Die erfindungsgemäße Flächenverkleidung vermag somit in weiten Bereichen die Funktion der bisher erforderlichen bituminösen Dämpfungsschichten zu übernehmen. Hierbei kann die zonenweise Schäumung bezw. Auftreibung derart herbeigeführt werden, daß die Aktivierungstemperatur des schäumenden oder treibfähigen Materials über der Erweichungstemperatur des thermoplastischen Materials liegt und Schäumen bezw. Treiben der Schicht durch zonenweise gezielte Temperaturanwendung nach Ausdehnung und Stärke gesteuert wird. Durch Einsatz unterschiedlicher Schäumungs- bezw. Treibmaterialien und zonenweise gezielte Temperaturanwendung besteht eine beliebige Variationsmöglichkeit in Bezug auf die Formgestaltung und Einstellung der physikalischen Eigenschaften. Eine weitere Variationsmöglichkeit besteht mit einer Verfahrensweise, bei der die Rückenbeschichtung bezw. eine der Schichten großflächig aufgeschäumt oder aufgetrieben und anschließend während der Verformung bereichsweise wiederum verdichtet wird.

Vorteilhaft wird das auf den Träger aufgebrachte pulvrige bezw. körnige Beschichtungsmaterial vor der thermischen Verdichtung mit einer von
einer Folie, einem Vlies oder einem Gewebe gebildeten Abdeckung versehen,
die einerseits während der thermischen Verdichtung und gleichzeitigen
oder nachfolgenden Verformung als Verdichtungshilfe und mechanische
Armierung dient und damit zur Erhöhung der Formstabilität des textilen
Flächengebildes sowohl während der Aufbringung der Beschichtung als auch
während der Verformung als auch im Betrieb beiträgt.

Eine weitere Verbesserung der Dichtigkeit der Beschichtung, ihrer
Haftung und Formstabilität kann dadurch erzielt werden, daß in die Dämmschicht dem Folienmaterial entsprechendes Material in ungefüllter feinpulveriger Form eingebracht wird, wodurch die Bindung zwischen den
Schichten und zum Trägermaterial erheblich verbessert wird.

Das Beschichtungsmaterial besteht in bekannter Weise zweckmäßig aus
schwerspatgefülltem Aethylen-Propylen-Polymer, Aethylenvinylacetat, Polyvinylchlorid, anderen Polyolefinen oder thermoplastischem Kautschuk, das
einen Füllgrad von zwischen 50 und 80 Gew.% an mineralischen Füllstoffen
enthält und mit einer Körnung zwischen 20 und 2000 Mü in einer Menge
zwischen 0,2 und 10,0 kg/m² aufgetragen wird, wohingegen die thermoplastische Abdeckung zweckmäßig in ebenfalls an sich bekannter Weise aus
Polyester, Polyaethylen, Polypropylen, Aethylenvinylacetat oder Polyurethan besteht.

Patentansprüche

1. Textile Flächenverkleidung für lärmbelastete Räume, insbesondere den Fahrgastraum von Kraftfahrzeugen, bestehend aus einem textilen Träger mit Rückenbeschichtung, die aus einem mit mineralischen Füllstoffen, insbesondere Schwerspat gefüllten thermoplastischen Kunststoffmaterial besteht und gemeinsam mit dem textilen Träger in eine den Raumkonturen entspechende Kontur verformt ist, dadurch gekennzeichnet, daß die textile Flächenverkleidung mit einer zonenweise in Abhängigkeit von der zonenspezifischen Lärmbelastung eine unterschiedliche Dicke und/oder Schwermaterialfüllung aufweisenden Beschichtung versehen ist.

2. Verfahren zur Herstellung einer textilen Flächenverkleidung für lärmbelastete Räume, insbesondere den Fahrgastraum von Kraftfahrzeugen, aus einem textilen Träger mit Rückenbeschichtung, die aus einem mit mineralischen Füllstoffen, insbesondere Schwerspat gefüllten thermoplastischen Kunststoffmaterial besteht und gemeinsam mit dem textilen Träger in eine den Raumkonturen entspechende Kontur verformt wird, dadurch gekennzeichnet, daß die Rückenbeschichtung in pulvriger oder körniger Form auf das unverformte textile Flächengebilde aufgebracht und anschließend mit Druck- und Temperatureinwirkung verdichtet wird.

Die Erfindung ist nachstehend anhand der Zeichnung beispielsweise veranschaulicht. Es zeigen:

Fig. 1    eine textile Flächenverkleidung gemäß Erfindung in einer schematischen Darstellung

Fig. 2    eine vergrößerte Teildarstellung der in Fig. 1 wiedergegebenen Flächenverkleidung.

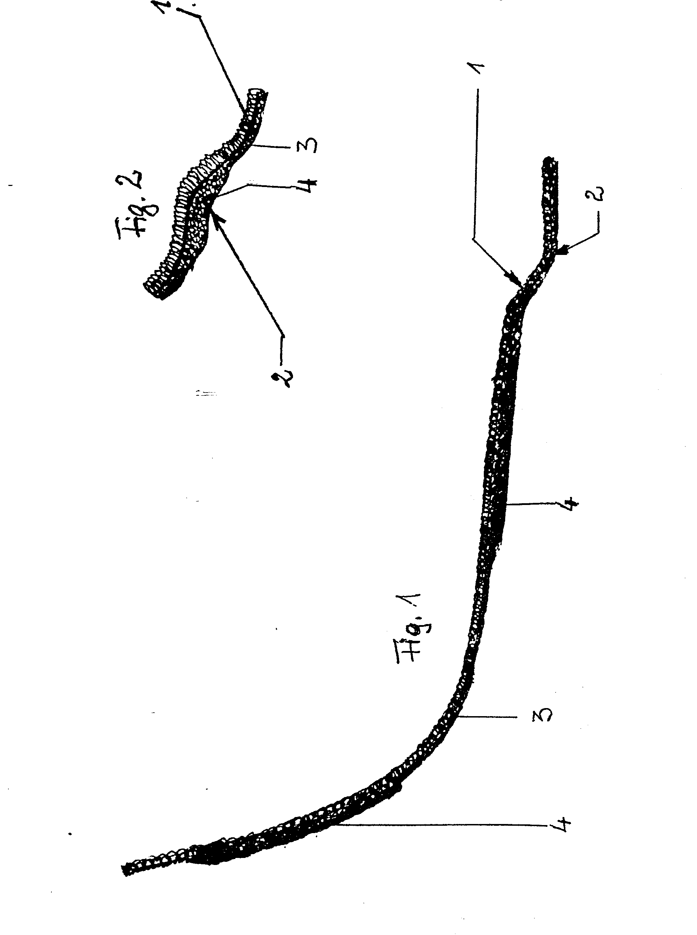

Die in der Zeichnung dargestellte textile Flächenverkleidung besteht aus einem textilen Träger 1 mit Rückenbeschichtung 2, die aus einem mit mineralischen Füllstoffen, insbesondere Schwerspat gefüllten thermoplastischen Kunststoffmaterial besteht und gemeinsam mit dem textilen Träger in eine den Raumkonturen entspechende Kontur verformt ist. Sie ist mit einer in den Zonen 3, 4 in Abhängigkeit von der zonenspezifischen Lärmbelastung eine unterschiedliche Dicke und/oder Schwermaterialfüllung aufweisenden Beschichtung versehen ist. Ihre Herstellung erfolgt zweckmäßig in der Weise, daß das Rückenbeschichtungsmaterial in pulvriger oder körniger Form auf das unverformte textile Flächengebilde aufgebracht und durch Temperatureinwirkung verdichtet sowie gegebenenfalls anschließend oder gleichzeitig aufgeschäumt oder aufgetrieben wird.

3. Verfahren nach Anspruch 2, dadurch gekennzeichnet, daß das pulvrige bezw. körnige Material mehrschichtig in unterschiedlicher Zusammensetzung aufgebracht wird.

4. Verfahren nach einem der Ansprüche 1 bis 3, dadurch gekennzeichnet, daß eine der Schichten oder mehrere einen Anteil an schäumendem oder treibfähigem Material enthält, das bei Erreichen einer vorgegebenen Temperatur eine großflächige oder bereichsweise Volumenvergrößerung der Rückenbeschichtung durch Aufschäumen bezw. Treiben bewirkt.

5. Verfahren nach Anspruch 4, dadurch gekennzeichnet, daß die Aktivierungstemperatur des schäumenden oder treibfähigen Materials über der Erweichungstemperatur des thermoplastischen Materials liegt und das Schäumen bezw. Treiben der Schicht durch zonenweise gezielte Temperaturanwendung nach Ausdehnung und Stärke gesteuert wird.

6. Verfahren nach Anspruch 5, dadurch gekennzeichnet, daß die Rückenbeschichtung unterschiedliche Schäumungs- bezw. Treibmaterialien enthält.

7. Verfahren nach Anspruch 4, dadurch gekennzeichnet, daß die Rückenbeschichtung bezw. eine der Schichten großflächig aufgeschäumt oder aufgetrieben und anschließend während der Verformung bereichsweise verdichtet wird.

8. Verfahren nach einem der Ansprüche 2 bis 7, dadurch gekennzeichnet, daß das auf den Träger aufgebrachte Beschichtungsmaterial vor der thermischen Verdichtung mit einer von einer Folie, einem Vlies oder einem Gewebe gebildeten Abdeckung versehen wird.

9. Verfahren nach einem der Ansprüche 2 bis 8, dadurch gekennzeichnet, daß das Beschichtungsmaterial einen Füllgrad von 50 bis 80 Gew-% an mineralischen Füllstoffen enthält und mit einer Körnung zwischen 20 und 2000 Mü in einer Menge zwischen 0,2 und 10,0 kg/m² aufgetragen wird.

10. Verfahren nach einem der Ansprüche 2 bis 9, dadurch gekennzeichnet, daß das Beschichtungsmaterial aus schwerspatgefülltem Aethylen-Propylen-Polymer, Aethylenvinylacetat, Polyvinylchlorid, andere Polyolefinen oder thermoplastischem Kautschuk besteht.

11. Verfahren nach Anspruch 10, dadurch gekennzeichnet, daß die thermoplastische Abdeckung aus Polyester, Polyaethylen, Polypropylen, Aethylenvinylacetat oder Polyurethan besteht.

12. Verfahren nach einem der Ansprüche 2 bis 11, dadurch gekennzeichnet, daß in die Dämmschicht dem Folienmaterial entsprechendes Material in ungefüllter feinpulvriger Form eingebracht wird.

Fig. 2

Fig. 1